# EUROPEAN PATENT SPECIFICATION

(11) **EP 0 885 530 B1**
(45) Date of publication and mention of the grant of the patent: **12.09.2001**
(21) Application number: 96901478.6
(22) Date of filing: 21.02.1996
(51) Int. Cl.: H04Q 3/00, H04L 29/06

(54) **DISTRIBUTED ARCHITECTURE FOR SERVICES IN A TELEPHONY SYSTEM**
VERTEILTE ARCHITEKTUR FÜR DIENSTE EINES TELEFONSYSTEMS
ARCHITECTURE REPARTIE DE SERVICES D'UN SYSTEME TELEPHONIQUE

(43) Date of publication of application: 23.12.1998
(73) Proprietor: International Business Machines Corporation, Armonk, N.Y. 10504 (US)
(72) Inventor: TRUONG, Hong, Linh, CH-8805 Richterswil (CH); WONG, Johnny, Wai-Nang, CH-8041 Zurich (CH)
(74) Representative: Klett, Peter Michael
(86) International application number: IB9600134
(87) International publication number: WO9731492

(56) References cited:
- EP-A- 0 398 183
- WO-A-95/23492
- BYTE, vol. 21, no. 2, February 1996, PETERBOROUGH US, pages 83-88, XP000549779 MULLER: "Dial 1-800-INTERNET"
- IEEE SPECTRUM, vol. 33, no. 1, January 1996, pages 30-41, XP000566101 BELL ET AL.: "Communications"

## Description

### FIELD OF THE INVENTION

This invention relates to telephony, in particular to a method and apparatus for enabling telephony over existing networks like the Internet or other data networks. Essentially, distributed call processing is employed using intelligence in the typical end-user devices, e.g. workstations or personal computers.

### BACKGROUND AND PRIOR ART

Computer-telephony integration is quickly developing a wide variety of applications that use well known, existing networks, e.g. the telephone networks, as well as new, often quickly expanding data networks, e.g. the Internet.

Telephony requires a real-time channel to provide the needed direct and immediate voice communication which makes it so attractive. Today, it also must provide certain supplementary services. Such supplementary services are traditionally implemented in the telephone switches, the so-called PBXs (for Private Branch Exchanges), through which the users are connected. Some examples for such services are:
- Alternate Call - this supplementary service enables a user A to put a currently active call to another user B on hold and place a call to, or activate a previously "on hold" call with, user C.
- Call Back - user A calls user B and finds that user B is busy; this supplementary service enables user A to request a call back from user B.
- Camp on Call - user A calls user B and finds that user B is busy; this supplementary service enables the call to be placed again as soon as user B becomes free.
- Deflect Call - this supplementary service enables a user to re-direct (or forward) an incoming call to another user or phone.
- Call Transfer - this supplementary service enables user A to transform two of his calls (with users B and C) into a new call between users B and C.
- Directed Pickup Call - user A calls user B and the call is in the ringing state; this supplementary service enables a third user C to answer the call from a different destination.
- Multi-line Appearance - this supplementary service enables an incoming call to ring at two or more users; the first user who answers gets the call.
- Call do not Disturb - this supplementary service enables a user to reject all incoming calls.

As said above, these supplementary services are traditionally implemented in the switches (or PBXs). Such PBXs are usually located at user's premises and connected to the public telephone network.

With the advent of new and versatile networks like the Internet or ATM (for Asynchronous Transfer Mode) networks that allow the exchange and transmission of digital data, including real time exchange of digitized voice which can be used for telephony, the traditional telephone systems are getting competition. However, when using such novel transmission tools, those supplementary services that were usually implemented in the PBXs are no more be available.

Further, computer-network telephony requires more complex transmission management since voice transmission is much more susceptible than data transmission to even minimal delays. Traditional call control in existing telephone networks is not adapted to provide this service for a data network.

Also, PBXs use a centralized approach to basic telephony services, i.e. call placement and termination, and to supplementary services. Due to the many functions that are performed, PBXs are generally complex and costly. They also treat the end-user equipment (e.g. the telephone sets) as simple devices that are specialized for telephony. With the wide availability of powerful workstations, it becomes attractive to use their capabilities for providing at least part of these telephony services and possibly integrate computers and telephony.

Some approaches for integrating computers and phones are addressed by James Burton in: "Standard Issue" in BYTE, September 1995, pp. 201-207. Burton describes several CTI (for Computer-Telephone Integration) architectures and their characteristic layout. The architectures listed by Burton, however, provide for a combined transmission of voice and control data over at least partially the same connections and are based on connectivity to a telephone network or a PBX. The power of the end-user workstations is not exploited for basic or supplementary telephony services.

US patent 4 634 812 by Hornburger et al discloses a method for transferring information including voice between computers in a decentralized telephone control system. This system provides a data, also voice, transmitting multi-wire bus and two single wire control buses. A telephone system according to the Hornberger patent consists of identical PBXs, all being connected by two control buses and one data/voice multi-wire bus. Thus, this system provides a distributed control in a telephone system through multiple parallel channels and especially designed PBXs. It is a specially designed, so-to-speak self-contained, system for PBXs and does not address the idea of exploiting the power of end-user workstations for basic telephony services and supplementary services.

US patent 4 313 036 to Jabara et al describes a distributed computerized PBX, called CBX, system wherein the CBXs are connected by both a voice and a packet-switched network. Two links or channels are provided between the CBXs: a signalling data link and a voice link. The data link is part of a virtual network which may be provided by a packet-switched network. However, this system concerns communication between PBXs for call control purposes and does not address the potential of end-user workstations for basic telephony services and supplementary services.

European patent application EP-A-0 398 183 addresses a rerouting problem occurring in a combined private/public network telephony system which customarily uses the private network but, whenever congestion occurs, redirects or reroutes private calls over the public network. Whenever the technical level of the private network is superior to the public network, e.g. a private ISDN network vs. a public non-ISDN network, the superior service features provided by the private network (on top of the voice feature) do not exist in the public network and thus cannot be provided. The solution described in EP-A-0 398 183 is to decouple feature and voice information at each of the nodes connected to (and connecting) the end user devices, e.g. the telephones or voice-equipped PCs. After decoupling in and by the "calling node", the feature information is transmitted separately from the voice information, e.g. via another link, to the "receiving node" which so-to-speak recombines feature and voice information so that the end user devices, and thus the end users, receive the full information.

The described technique thus provides a specific solution for a classic, PBX-equipped (or with other special telephony machinery) private/public network. A solution for the more general problem of providing a complete voice/feature service fully independent from any existing telephony system and independent from the particular design of the switches and the protocols, e.g. over the Internet or similar networks not specifically adapted to telephony, is neither addressed nor given in this prior art.

Various systems that use the Internet for telephony have been proposed. One such is advertised in the World Wide Web (WWW) under the Universal Resource Locator (URL) http://www.vocaltec.com. An overview of some other such systems with more references can be found under the URL http://www.northcoast.com/⁻savetz/voice-faq.html. The systems described there exploit the power of the users' workstations for limited basic telephony services, but do neither address nor provide means for supplementary services.

Thus, it is an object of this invention to provide, for a telephone system, a distributed, i.e. workstation-oriented, architecture with more than one link between the workstations and a method for providing not only basic telephony services, such as call placement and termination, but also complex supplementary service functions.

Another object is to provide a telephone system with a distributed, i.e. not switch-centered, architecture that uses an existing network, preferably a packet-switched network, to implement desired basic and/or supplementary services.

The invention provides a solution to the need of using existing network infrastructure for telephony, in particular for complex supplementary services. By employing a workstation-oriented architecture, the invention provides an effective and versatile tool for implementing any desired supplementary services, that can be altered and adapted at any time with minimal effort and practically without disturbing an existing network architecture and/or protocols used.

### SUMMARY OF THE INVENTION

In brief, the distributed, workstation-oriented architecture for basic and supplementary telephony services according to the invention, which services were traditionally implemented in the switches (PBXs), comprises setting up a first communication channel for transmitting first signals and setting up a second communication channel for second signals, whereby both channels directly connect the end-user devices, e.g workstations. Preferably, the first signals are control signals and the second signals voice signals. The two (or more) connections or channels can be established directly and independently, the second or voice channel being preferably set up subsequent to the first or control channel. The control channel, once established, is preferably maintained permanently during a communication session. A session in this context may include interruptions or pauses in the voice connection as long as an intent to continue the telephone communication is recognizable.

With the invention, telephony services can be implemented solely in workstations; the use of a server for a limited number of functions, e.g. address resolution or authentication, may however be required or advantageous. The switches, PBXs, if used at all, only need to provide the communication channels for voice and/or real-time data transport. They are not involved in the implementation of the services.

Details of the invention may be extracted from the following general and detailed description of preferred implementations.

### BRIEF DESCRIPTION OF THE DRAWINGS

- *Fig. 1*: is an overview of one possible configuration using the invention;
- *Fig. 2*: depicts the general function of the invention;
- *Fig. 3*: exemplifies the call placement process executed by the invention;
- *Fig. 4*: exemplifies the call back process executed by the invention;
- *Fig. 5*: exemplifies the call transfer process executed by the invention;
- *Fig. 6*: references one architecture of an implementation, and
- *Fig. 7*: references another architecture according to the invention.

### DESCRIPTION OF THE PREFERRED EMBODIMENTS

### A. General Description

### A.I. Overview

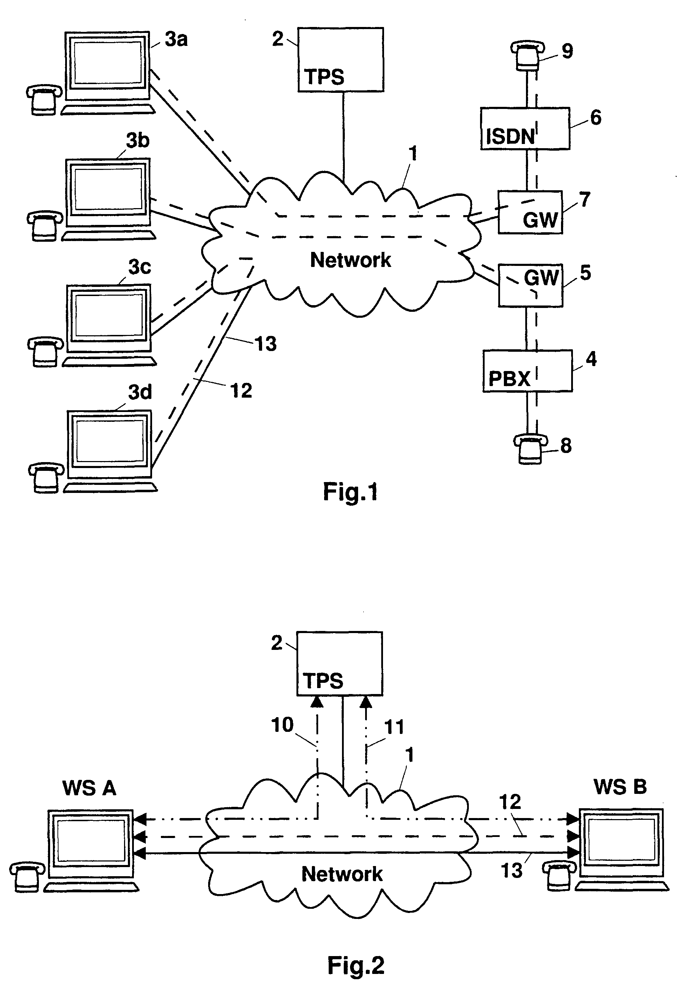

Fig.1 shows an example for a general configuration in which the invention can be applied. A network 1, which may be an ATM network or an IP (Internet Protocol) network as examples for existing digital networks conventionally used for data transfer, links workstations (WS) 3a to 3d. Also connected to network 1 is a telephony server (TPS) 2. Further, to enable communication with a PBX 4, a first gateway (GW) 5 is also attached to network 1. A second gateway 7 links network 1 to an ISDN (Integrated Service Digital Network) 6. Each of PBX 4 and ISDN 6 have connected to it usual telephones 8 and 9 and/or appropriate workstations that allow telephony.

The gateways shown in Fig.1, which are not part of this invention, usually support interworking with an ISDN and/or with an existing PBX, respectively. Technically, a gateway is able provide signalling interworking (mapping of ISDN/PBX signalling and signalling used in a distributed, i.e. workstation-oriented, architecture), voice signal translation (between voice encoding scheme used in ISDN/PBX and that used in the distributed architecture), and/or proxy functions for ISDN/PBX users.

The dotted lines in Fig.1 shall illustrate the telephone calls between the users 3a to 3d, 8, and 9; the solid lines shall indicate the attachments to the network. This will be apparent in more detail from the following description of Fig.2.

Fig.2 shows an overview of the basic configuration and the essential data flow according to the invention. The invention uses a distributed, workstation-oriented architecture which will be apparent from the detailed description of embodiments of the invention below.

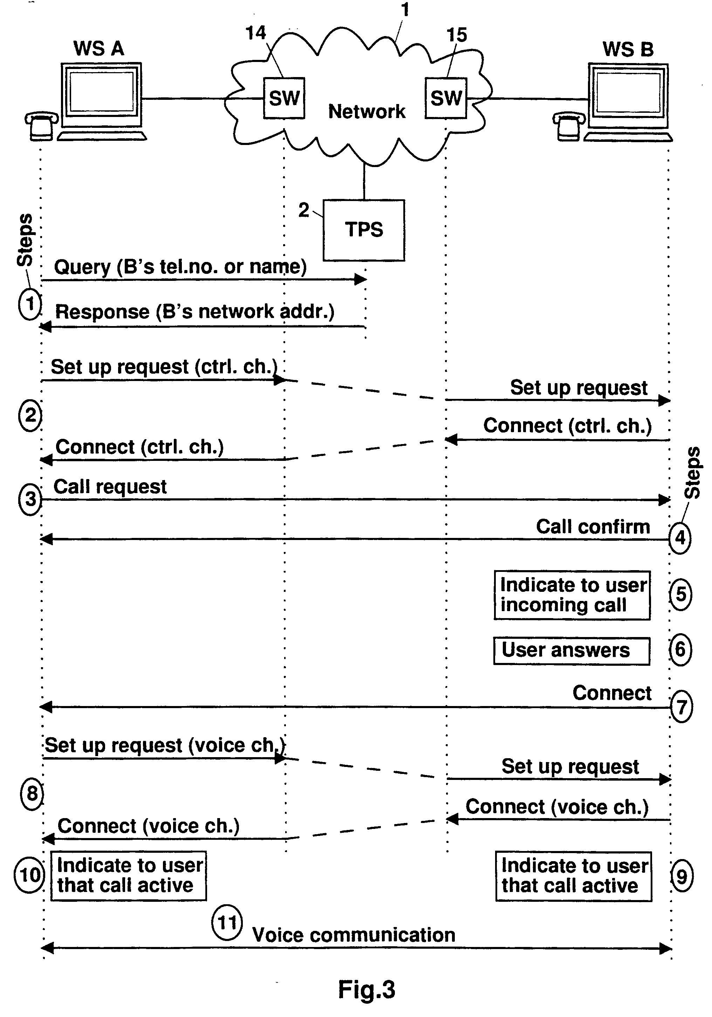

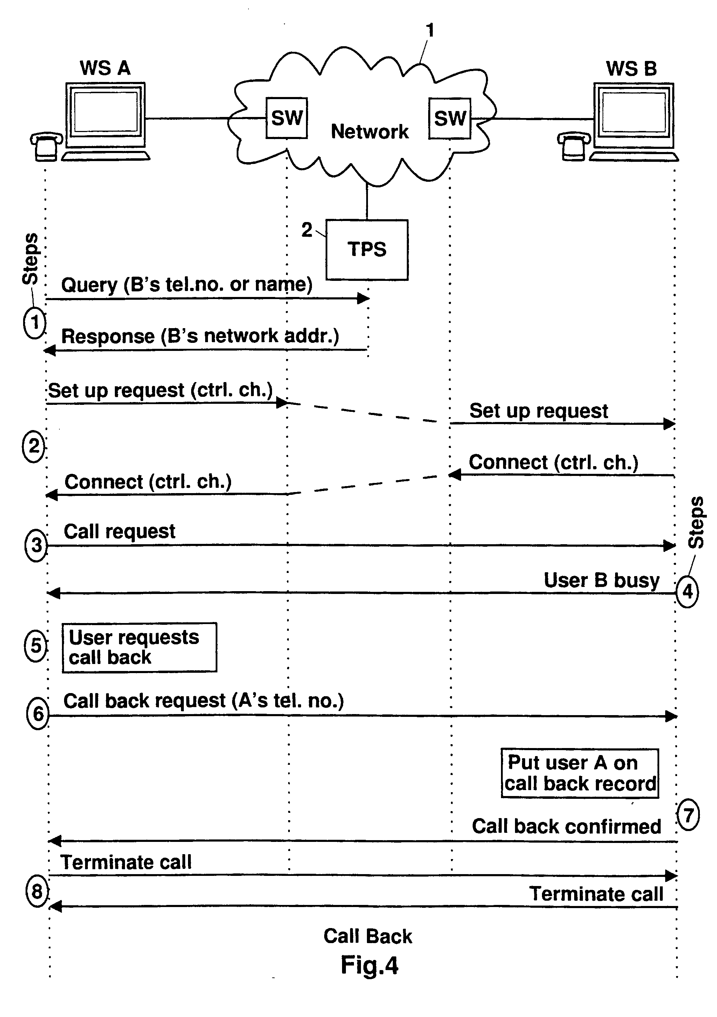

One key element of the novel architecture is the use of two separate end-to-end channels between the workstations for each phone call. As shown in Fig.2, a workstation-workstation control channel 12 is provided for call control and a voice channel 13 for voice communication. Workstations A and B exchange control messages over control channel 12. These messages could contain name or phone number of the calling and called users, qualify service parameters (e.g. voice encoding schemes supported by the workstation or preferred by the user), status information regarding the call (e.g. whether call is active or on hold), and specific requests by users (e.g. put user on call-back list). All messages transported on control channel 12 are handled by processes at the workstations; they are not interpreted by the switches or routers (Figs.3 and 4) which provide the means for these channels.

Another key element of the invention is that control channel 12 is maintained for the duration of the call, whereas voice channel 13 need not be sustained permanently, but is set up only when needed. For example, voice channel 13 can be released when a call is put on hold, and re-established when the call is activated again. The ability to exchange any control signals or messages over the maintained workstation-workstation control channel 12 allows the implementation of a wide variety of supplementary telephony services without involvement of the switches or routers.

Telephony server 2 may perform functions such as name/phone number registration, address resolution, and authentication. Workstations request service from server 2 over separate workstation-server control channels 10 and 11. These control channels are set up on a as-needed basis. So much for the general layout.

Since any of the channels mentioned, control channels 10, 11, or 12, as well as voice channel 13, respectively, can be provided by existing networks, e.g. ATM or IP networks, the invention allows the implementation of basic telephony services (i.e. call placement and termination) as well as supplementary telephony services on practically any of the existing and evolving data networks.

The following is a more general description of a set of functions implemented according to the invention; for someone skilled in the art, it is already sufficient for carrying out the invention. Still, a subset of these functions will be addressed in much more detail further down.

### A.II. Basic Telephony Services

### 1. Place and Receive a Call

The steps for this process are depicted in Fig.3. User A wishes to place a call to user B; each is at one of the workstations 3a to 3d shown in Fig.1.

Step 1: User A's workstation (WS A) maps user B's name or phone number address onto the network address of user B's workstation (WS B). This "address mapping" function may be provided by an appropriate server process running at telephony server 2.

Step 2: Workstation A sets up a control channel (12 in Fig.2) to workstation B.

Step 3: Workstation A sends a "call request" message to workstation B over the control channel.

Step 4: Workstation B returns a "call confirm" message to workstation A, informing workstation A that workstation B is able to proceed with call placement

Step 5: Workstation B indicates to user B that there is an incoming call.

Step 6: User B responds that he is answering the call.

Step 7: Workstation B sends a "connect" message to workstation A over the control channel, informing workstation A that user B is answering the call, and asking workstation A to set up a voice channel.

Step 8: Workstation A sets up a voice channel to workstation B.

Step 9: Workstation B indicates to user B that the call is now active.

Step 10: Workstation A indicates to user A that the call is now active.

Step 11: User A and user B talk over the voice channel.

### 2. Call Termination

At any time, user A or user B may request call termination. Suppose call termination is initiated by user A. The steps are as follows:

Step 1: Workstation A sends a "terminate call" message to workstation B over the control channel, and releases the voice channel of the call.

Step 2: Workstation B returns a "terminate call" message to workstation A, and release voice channel also.

Step 3: Workstation A completes call termination by releasing the workstation-workstation control channel of the call.

### A.III. Supplementary Services

### 1. Alternate Call

At some point in time, user A may have two or more calls in progress. One of these calls (to user B) is active while the others are on hold. Suppose user A wishes to put the call to user B on hold and activate the call to user C. The steps are as follows:

Step 1: Workstation A sends a "hold" message to workstation B over the control channel with workstation B, informing workstation B that the call is now on hold.

Step 2: Workstation A sends an "active" message to workstation C over the control channel with workstation C, informing workstation C that the call is now active.

### 2. Call Back

During call placement, workstation A finds that user B is busy at the initial message exchange over the control channel. User A then requests a call back. The steps are illustrated in Fig.4,

Steps 1 to 3: Same as those for placing a call (see above: Place and Receive a Call, described in connection with Fig.3).

Step 4: Workstation B responds with a "user busy" message, informing workstation A that user B is busy, but call back is possible.

Step 5: User A requests that he be put on user B's call back list.

Step 6: Workstation A sends a "call back request" message to workstation B over the control channel. This message contains user A's phone number.

Step 7: Workstation B enters user A's phone number onto user B's call-back record.

When user B subsequently checks the call-back record, he/she will learn that user A has requested a call back.

### 3. Camp on Call

This is similar to the above Call Back process, except that an attempt will be made to call user B again as soon as B becomes free.

Steps 1 to 3: Same as those for Place and Receive a Call.

Step 4: Workstation B responds with a "user busy" message, informing workstation A that user B is busy, but camp on busy is possible.

Step 5: User A requests camp on call.

Step 6: Workstation A sends a "camp on call" message to workstation B over the control channel.

Step 7: Workstation B returns a "camp on confirmed" message to workstation A.

Step 8: When user B becomes free and indicates that he is answering the camp on call, workstation B resumes the call placement with workstation A, at step 7 of Fig.3.

### 4. Deflect Call

User B may wish to forward an incoming call to another phone number (phone number M) immediately, or if he/she is busy, or if the call is not answered after a time-out interval. Suppose user A is placing a call to user B, the steps for the case of deflect after time-out are:
Steps 1 to 5: Same as those for Place an Receive a Call.
Step 6: User B has not answered after a time-out.
Step 7: Workstation B sends a "deflect call" message to workstation A over the control channel. This message contains the phone number to which the call is to be forwarded (phone number M).
Step 8: Workstation B releases the control channel to workstation A.
Step 9: Workstation A places a call to phone number M.

### 5. Call Transfer

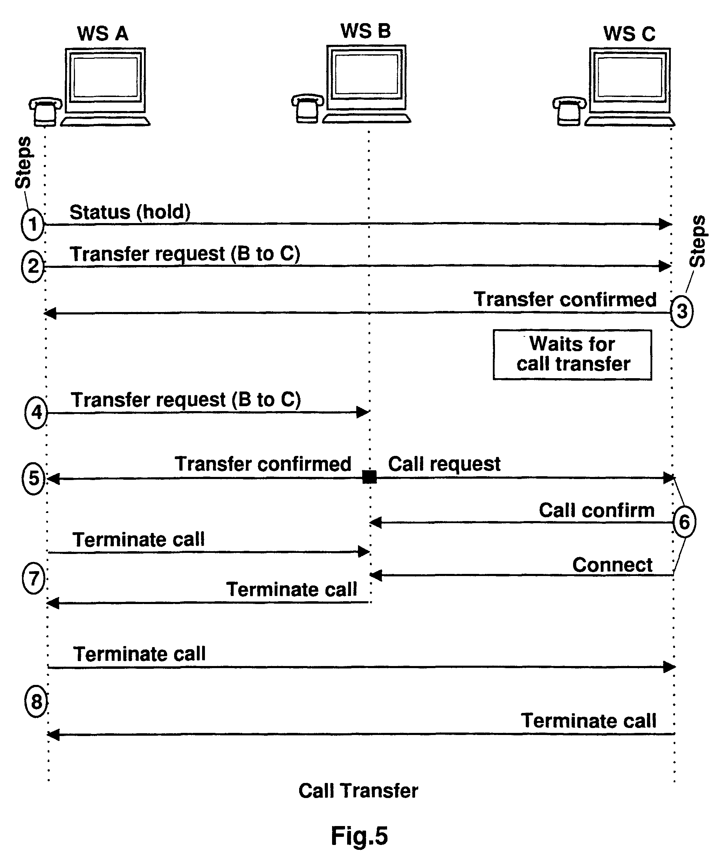

Suppose user A has two calls in progress: a call with user B which is on hold and a call with user C which is active. User A requests to have user B and user C connected, and his/her calls to these users terminated. This process is shown in Fig.5. The steps are:

Step 1: Workstation A sends a "hold" message to workstation C over the control channel with workstation C.

Step 2: Workstation A sends a "receive transfer call" message to workstation C over the control channel with workstation C, requesting workstation C to accept a transfer call from workstation B.

Step 3: Workstation C returns a "transfer confirm" message to workstation A, and waits for a transfer call from workstation B.

Step 4: Workstation A sends a "place transfer call" message to workstation B over the control channel with workstation B, requesting workstation B to place a transfer call to workstation C.

Step 5: Workstation C returns a "transfer confirm" message to workstation A.

Step 6: Workstation B places a transfer call to workstation C.

Step 7: Workstation A initiates termination of his/her call to workstation B.

Step 8: Workstation A initiates termination of his/her call to workstation C.

### 6. Directed Pickup Call

Suppose user A calls user B and the call is in the ringing state. A third user C wishes to answer the call. The steps are as follows.

Step 1: Workstation C sets up a control channel to workstation B.

Step 2: Workstation C sends a "pickup query" message to workstation B to find out whether call pick-up is possible or not. User C's phone number is included in this message.

Step 3: Workstation B returns a "pickup allowed" message to workstation C.

Step 4: Workstation C sends a "pickup request" message to workstation B, requesting call pickup.

Step 5: Workstation B sends a "directed pickup" message to workstation A which contains user C's phone number, instructing workstation A to place a call to user C.

### 7. Multi-line Appearance

Suppose user A places a call to a phone number that has multi-line appearance. Workstation A maps the destination phone number onto a list of network addresses. This "address mapping" function is provided by a server process running at the telephony server. Workstation A then places separate calls to each of these addresses. Workstation A will proceed with the first destination that answers, and terminates the call placement to the other addresses.

### 8. Call do not Disturb

Suppose user B has requested call do not disturb. Any workstation A attempting to place a call to user B will get a "do not disturb" message over the control channel in return.

### B. Detailed Description of Specific Functions

### B.I. Reference Architecture

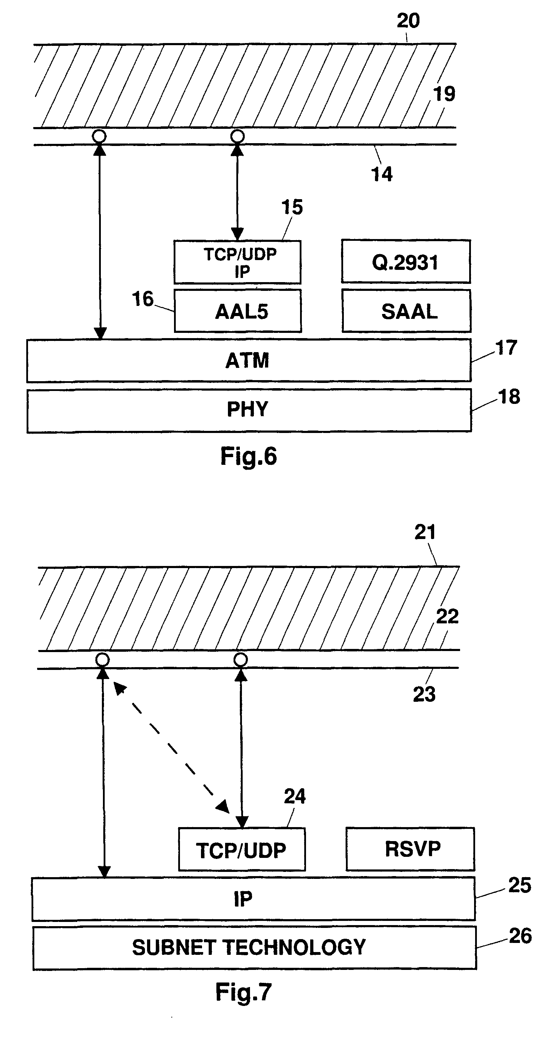

Figs.6 and 7 show the reference architecture of a communication system employing the invention. The basic telephony services (mainly call establishment, call termination) and supplementary services (e.g. call hold, call back, call transfer, call deflection) are implemented by an enabling layer at the workstation. Integrated are functions such as address resolution, voice encoding, and authentication.

Until now, a user was identified by a name or a phone number. In the following, users will be identified by their respective e-mail address.

Fig.6 depicts an architecture according to the invention in an ATM (Asynchronous Transfer Mode) environment. Physical layer 18 and ATM layer 17 are standard design features. TCP (Transmission Control Protocol) connection is set up over IP, i.e. Internet Protocol 15, which runs on top of AAL5, i.e. ATM Adaptation Layer 16. The implementation of IP on an ATM network is available off-the-shelf.

Voice communication requires QoS (Quality of Service) guarantee from transport services interface 14, e.g. acceptable end-to-end delay and delay jitter. The voice channel is established by a VCC (Virtual Channel Connection) with QoS. Encoded voice samples are sent in ATM cells. Q.2931 and SAAL (Signalling ATM Adaptation Layer) are signalling protocols for VCC setup and release. Transport services interface 14 provides transport for voice and control channels.

Enabling layer 19 uses the services provided by transport services interface 14 for establishing control channels and voice channels. Specifically, both workstation-server and workstation-workstation control channel are realized by TCP connections as indicated by block 15. Enabling layer 19 supports an API (Application Programming Interface) which can be used for the development of telephony applications.

Fig.7 depicts an architecture according to the invention in an IP (Internet Protocol) environment. The physical layer is an IP subnet technology 26 able to provide the required services. QoS for the voice channel can be provided by a pair of RSVP (Resource Reservation Protocol) flows because an RSVP flow is uni-directional. Encoded voice samples are sent in UDP (User Datagram Protocol) packets using TCP/UDP protocol 24 and transport services interface 23. In this case, RSVP is the signalling protocol used between the workstations and the routers to establish the needed RSVP flows.

In such an IP subset, encoded voice packets can also be sent in UDP packets without RSVP. This is a best-effort service and no QoS guarantee is provided. Transport services interface 23 provides transport capacity for voice and control channels. Enabling layer 22 supports an API 21 which can be used for developing telephony applications.

So much for the functionality of the invention. Some selected functions will be described further below in extensive detail to clarify the invention.

The abbreviations already introduced above, e.g. WS for workstation, WS A for workstation of user A as shown in the drawings, will be exclusively used.

Control messages exchanged over WS-server and WS-WS control channels are used to implement the basic and supplementary services. These control channels are realized by TCP connections.

Each control message contains a code which indicates the name of the control message and optionally a list of parameters (this list may be empty). For convenience, a control message is denoted by:
message-name (parameter list)

This notation will be used in the description of how the basic and supplementary services are implemented. In addition, only the parameters relevant to the procedure being described are listed, in order not to include unnecessary details.

Several timers are used in the implementation descriptions. These timers operate as follows. A timer is stopped when an expected event occurs before it expires. If, for whatever reason, the timer expires, some recovery action will be taken. In the implementation descriptions, unless otherwise specified, the recovery action is to terminate the phone call, using the procedure described in Section B.II.2. below.

### B.II. Basic Telephony Services

Basic telephony services include call placement and call termination.

### 1. Call Placement

Suppose user A at workstation A (WS A) wishes to place a call to user B at workstation B (WS B) and user B is free to accept the call. The basic steps are depicted in Fig.3, there using the generic terms of Section A.II. Details of the implementation at WS A and WS B are described below.

Step 1: WS A maps user B's e-mail address onto WS B's TCP address.

WS A procedure:
Upon receiving a request for call placement from user A, WS A sets up a TCP connection to the telephony server. This connection will be used as the WS-server control channel. The setting up of a TCP connection is a well-known procedure. WS A then prepares a AdrQuery (user B's e-mail address) control message and sends this message to the telephony server.

The telephony server, upon receiving the AdrQuery control message, checks its address mapping database. If an entry for user B's e-mail address is found, the telephony server prepares an AdrRsp (WS B's TCP address) control message, and returns this message to WS A; otherwise, an AdrRsp (user B not registered) is prepared and returned. In both cases, the TCP connection between WS A and the telephony server is released. The address mapping function performed by the telephony server can be implemented by available nameserver technologies, e.g. the Internet domain name system.

Upon receiving the AdrRsp control message from the telephony server, WS A interprets the content of this message. If WS B's TCP address is included as a parameter, WS A proceeds to step 2 of call placement. On the other hand, if "user B is not registered" is indicated, WS A informs user A about this indication, and the call placement is finished.

Step 2: WS A sets up a WS-WS control channel to WS B.

WS A procedure:
WS A sets up a TCP connection to WS B. This connection will be used as the WS-WS control channel between WS A and WA-B. WS A then proceeds to step 3 of call placement.

WS B procedure:
As a result of WS A action to set up a TCP connection, WS B completes the connection setup, and starts timer TB1.

Step 3: WS A sends a "call request" control message to WS B.

WS A procedure:
WS A prepares a CallReq (user A's e-mail address, user B's e-mail address) control message, sends this message to WS B, and starts a timer TA2.

Step 4: WS B returns a "call confirm" control message to WS A, informing WS A that WS B is able to proceed with call placement.

WS B procedure:
Upon receiving the CallReq control message from WS A, WS B stops timer TB1, and checks whether user B's e-mail address matches that contained in the CallReq control message. If this check is positive and user B is free, WS B prepares a CallCnf (B free) control message, and returns this message to WS A. WS B then proceeds to step 5.

On the other hand, if the check is negative, WS B terminates call placement using the procedure described in Section B.II.2.

WS A procedure:
Upon receiving the CallCnf control message from WS B, WS A stops timer TA2 and starts another timer TA3.

Step 5: WS B indicates to user B that there is an incoming call.

WS B procedure:
WS B informs user B that there is an incoming call and starts a timer TB4.

Step 6: User B responds that he is answering the call.

WS B procedure:
WS B stops timer TB4 and proceeds to step 7.

Step 7: WS B informs WS A that user B is answering the call and asks WS A to set up a voice channel.

WS B procedure:
WS B prepares a Connect control message, sends this message to WS A and starts timer TB5.

Step 8: WS A sets up a voice channel to WS B.

WS A procedure:
Upon receiving the Connect control message from WS B, WS A stops timer TA3 and sets up a voice channel to WS B. This connection will be used for the phone conversation between user A and user B. The implementation of voice channel setup will be described in section B.II.1.1.

Step 9: WS B indicates to user B that the call is now active.

WS B procedure:
Upon receiving the voice call setup request from WS A, WS B completes the voice channel setup, stops timer TB5, and informs user B that the call is active.

Step 10: WS A indicates to user A that the call is now active.

WS A procedure:
WS A informs user A that the call is active.

Step 11: User A and user B talk over the voice channel.

WS A procedure:
During the phone conversation, WS A prepares voice messages which contain encoded voice samples from user A and sends these messages over the voice channel to WS B. WS A also decodes the voice samples contained in voice messages received from WS B.

WS B procedure:
During the phone conversation, WS B prepares voice messages which contain encoded voice samples from user B and sends these messages over the voice channel to WS A. WS B also decodes the voice samples contained in voice messages received from WS A.

### 1.1. Voice Channel Setup

The negotiation of the type of voice channels to be used is done during call setup. The voice channel types include ATM (Asynchronous Transfer Mode), RSVP (Resource Reservation Protocol), or best-effort UDP (User Datagram Protocol). ATM and RSVP support quality of service guarantees, but best-effort UDP does not. Best-effort UDP is the default type. The negotiation is implemented as follows.

At step 3 of call placement (Fig.3), WS A sends a CallReq control message to WS B. The parameters relevant to the negotiation are: WS A's preferred voice channel type, and the corresponding addressing information for voice channel setup. The addressing information for best-effort UDP is also included as a parameter if it is not the preferred type.

At step 4 of call placement, WS B confirms the voice channel preferred by WS A if it also has access to the same type, otherwise WS B confirms that best-effort UDP (the default) will be used. In the CallCnf control message sent by WS B to WS A, the relevant parameters are confirmed voice channel type, and the corresponding addressing information for voice channel setup.

At step 8 of call placement: WS A sets up a voice channel to WS B. For ATM and RSVP, standard protocols are specified, and the setup is therefore implemented by known procedures. For best-effort UDP, there is no need to implement voice channel set-up because UDP is a datagram protocol.

### 2. Call Termination

At any time, user A or user B can request call termination. Call termination can also be initiated because a timer has expired. Suppose WS A initiates call termination. The steps are as follows:

Step 1: WS A informs WS B of call termination.

WS A procedure:
WS A prepares a TermCall control message and sends this message to WS B. WS A also stops any running timer, releases any existing voice channel of the call, and starts timer TA6. Release of ATM and RSVP voice channel types are implemented by known procedures. For best effort-UDP, there is no need to implement voice channel release because UDP is a datagram protocol.

If TA6 expires before a TermCall control message is received from WS B, WS A completes call termination by releasing the WS-WS control channel to WS B.

Step 2: WS B informs WS A of call termination.

WS B procedure:
Upon receiving a TermCall control message from WS A, WS B stops any timer, releases any existing voice channel of the call, prepares a TermCall control message, sends this message to WS A, and releases the WS-WS control channel to WS A.

Step 3: WS A completes call termination.

WS A procedure:
Upon receiving a TermCall control message from WS B, WS A stops timer TA6 and releases the WS-WS control channel to WS B.

### B.III. Supplementary Services

In the following, some implementations of supplementary services are described. As said above, one key to this invention is the ability to exchange control messages over the WS-WS control channel which is maintained for the duration of a call. Two types of control messages shall be first defined. This is followed by a description of the implementation of three exemplary supplementary services.

### 1. Control Message Definition

### 1.1. Status Control Message for Hold or Activate Call

When a call is in the "active" state, the users can carry out their conversation over the voice channel. On the other hand, when the call is in the "hold" state, conversation between the users is suspended. The Status control message is defined to support state changes.

Status (hold): the remote WS is informed that the state of the call has been changed to "hold".

Status (active): the remote WS is informed that the state of the call has been changed to "active".

### 1.2. Supplementary Service Control Message

The following four control messages are defined to support the implementation of the various supplementary services:
- SSInfo: This message is used to inform the remote WS about the possibility of activating a certain SS (Supplementary Service).
- SSReq: This message is used to request the remote WS to perform actions relating to a certain SS.
- SSCnf: This message is sent in response to a SSReq message to confirm the processing of a SS that the remote WS has requested.
- SSReject: This message is sent in response to a SSReq to reject the processing of a SS that the remote WS has requested; the reason for the rejection is included.

The above SS messages can be sent any time after the CaIICnf control message (see step 4 of call placement, Fig.3), and before a TermCall control message (see step 1 of call termination).

### 2. Workstation Procedures for Supplementary Services

In this section, the implementation details of three supplementary services are described. These examples illustrate how the invention is to be used. Other supplementary services can be easily implemented by someone skilled in the art on the basis of these examples and the general description above.

### 2.1. Alternate Call

At any point in time, a user A may have two or more calls in progress. One of these calls (to user B) is active while the others are on hold. Suppose user A requests to put the call to user B on hold and activate the call to user C. The alternate call supplementary service is implemented as follows:

Step 1: WS A informs WS B that the call has been put on hold.

WS A procedure:
Upon receiving the request from user A, WS A changes the state of the call with WS B to "hold", disconnects the voice channel of this call from its audio subsystem, prepares a Status (hold) control message, and sends this message to WS B.

WS B procedure:
Upon receiving the Status message from WS A, WS B changes the state of the call with WS A to "hold" and disconnects the voice channel of this call from its audio subsystem.

Step 2: WS A informs WS C that the call has been activated.

WS A procedure:
WS A changes the state of the call with WS C to "active", attaches the voice channel of this call to its audio subsystem, prepares a Status (active) control message, and sends this message to WS C.

WS C procedure:
Upon receiving the Status message, WS C changes the state of the call with WS A to "active" and attaches the voice channel of this call to its audio subsystem.

### 2.2. Call Back

This process is depicted in Fig.4, there using the generic terms of Section A.III. Suppose user B has a "call back" record which is maintained by WS B. Any calling user A may request to have his e-mail address entered into this record, thus asking user B to call back at his convenience. This request is made during call placement in case user B is busy or does not answer. The call back supplementary service for the case of user B busy is implemented as follows (see Fig.4).

Steps 1 to 3: The procedures for WS A and WS B are identical to those for call placement (see Section B.II.1.).

Step 4: WS B returns a "call confirm" control message to WS A, informing WS A that user B is busy, but call back is possible.

WS B procedure:
Upon receiving the CallReq control message from WS A, WS B stops timer TB1 and checks whether user B's e-mail address matches that contained in the CallReq control message. If this check is positive but user B is busy, WS B prepares a CallCnf (user B busy, call back record) control message, returns this message to WS A, and starts timer TB4.

WS A procedure:
Upon receiving the CallCnf control message from WS B, WS A stops timer TA2, informs user A that user B is busy, but call back is possible, and starts timer TA3.

Step 5: User A requests that he be put on user B's call back record.

WS A procedure:
WS A stops timer TA3 and proceeds to step 6.

Step 6: WS A sends a SSReq control message to WS B.

WS A procedure:
WS A prepares a SSReq (call back request, user A's e-mail address) control message, sends this message to WS B, and starts timer TA5.

Step 7: WS B enters user A's e-mail address onto user B's call-back record.

WS B procedure:
Upon receiving the SSReq message from WS A, WS B stops TB4, enters user A's e-mail address to user B's call back record, prepares a SSCnf (call back confirmed) and returns this message to WS A. WS B also starts timer TB6.

Timer TB6 is stopped as part of call termination initiated by WS A at step 8 (see Section B.II.2.).

Step 8: WS A terminates call placement

WS A procedure:
Upon receiving the SSCnf control message from WS B, WS A stops timer TA5 and initiates procedure for call termination as described in Section B.II.2.

### 2.3. Call Transfer

This process is shown in Fig.5, there using the generic terms of Section A.III. Suppose user A has two calls in progress: a call with user B which is on hold and a call with user C which is active. User A requests to have user B and user C connected and his calls to these two users terminated. The implementation details of the call transfer supplementary service are described below. For ease of exposition, any timers used are not mentioned, but their usage is similar to that described in call placement (Section B.II.1.) and call back (Section B.III.2.).

Step 1: WS A puts its call to WS C on hold.

WS A procedure:
Upon receiving the call transfer request from user A, WS A changes the state of the call to WS C to "hold", disconnects the voice channel of this call from its audio subsystem, prepares a Status (hold) control message and sends this message to WS C.

WS C, upon receiving the Status control message, changes the state of the call with WS A to "hold" and disconnects the voice channel of this call from its audio subsystem.

Step 2: WS A requests WS C to receive a transfer call.

WS A procedure:
WS A prepares a SSReq (receive transfer call, user B's e-mail address) and sends this message to WS C.

Step 3: WS C confirms the transfer request.

WS C procedure:
Upon receiving the SSReq control message from WS A, WS C prepares a SSCnf (transfer confirmed) control message and sends this message to WS A. WS C also saves user B's e-mail address and enters the "wait for transfer" state.

While in the "wait for transfer" state, WS C only accepts calls initiated by a CallReq (transfer call) control message from WS B. All other CallReq control messages will be responded to by a CallCnf (user C busy).

Step 4: WS A requests WS B to place a transfer call.

WS A procedure:
Upon receiving the SSCnf control message from WS C, WS A prepares a SSReq (place transfer call, user C's e-mail address) and sends this message to WS B.

Step 5: WS B confirms the transfer request.

WS B procedure:
Upon receiving the SSReq control message from WS A, WS B prepares a SSCnf (transfer confirmed) and sends this message to WS A.

Step 6: WS B places a transfer call to WS C.

WS B procedure:
WS B places a "transfer" call to WS C using the procedure described in Section B.II.1.

Step 7: WS A terminates calls with WS B

WS A procedure:
Upon receiving the SSCnf control message from WS B, WS A initiates call termination for its call with WS B using the procedure described in Section B.II.2.

Step 8: WS A terminates calls with WS C

WS A procedure:
WS A initiates call termination for its call with WS C using the procedure described in Section B.II.2.

The above description of implementations shows how an architecture for services in a telephony system can be devised which integrates computer and telephony in a novel way by taking advantage of the computing power and versatility of today's workstations and personal computers as well as the quickly developing digital networks that connect virtually the whole globe. It is to be understood that the above description of embodiments merely illustrates the principles of the invention and its various applications in known, existing networks like the Internet and ATM networks, as well as new data networks being developed, and that someone skilled in the art can easily develop various modifications based on the above without departing from the scope of the appended claims.

## Claims

1. A method for providing and/or controlling a telephony connection between at least two users connected through a network (1, 4-6), said method comprising the steps of:
- establishing a first communication channel (12) between said users for transmitting first signals,
- establishing a second communication channel (13) between said users for transmitting second signals,
- said first and second communication channels (12, 13) being independent of each other,
- each said communication channel being established essentially directly between end user devices (3a - 3d) each of which is directly associated with one of said users, and
- said first and second signals being each generated by or within said end user devices (3a - 3d).

2. The method according to claim 1, wherein
the first signals exchanged between the end user devices (3a-3d) are control signals and the second signals are voice signals, preferably encoded voice signals.

3. The method according to claim 2, wherein
the control signals exchanged between the end user devices (3a-3d) include signals effecting and/or providing basic telephony services and/or supplementary telephony services.

4. The method according to claim 3, wherein
the control signals exchanged between the end user devices (3a-3d) generated by or within said devices provide desired channel establishing and control functions directly from said end user devices.

5. The method according to any of the preceding claims, wherein
in addition to the communication signals, a voice transmission function, including enciphering/deciphering, is implemented in the end user devices (3a-3d).

6. The method according to claim 1, wherein
each of the channels (12, 13) connecting the end user devices (3c, 3d) of the users communicating or desiring to communicate is transparent and independent.

7. The method according to claim 1, wherein
one, preferably the first communication channel (12) is maintained permanently through a telephony session, whereas the other, preferably the second communication channel (13) is designed to enable intermittent operation.

8. A distributed system for providing and/or controlling a telephony connection between at least two end user devices (3a-3d) over a decentralized network (1), wherein
- at least one of said end user devices (3a-3d) comprises means for establishing a first communication channel (12) essentially directly between said end user devices (3a-3d) for transmitting first signals, and
- at least one of said end user devices (3a-3d) comprises means for establishing an independent second communication channel (13) essentially directly between said end user devices (3a-3d) for transmitting second signals.

9. The system according to claim 8, wherein
the means in the end user devices (3a-3d) is designed to enable intermittent operation of one of the channels whereas the other channel is permanently maintained.

10. The system according to claim 8, wherein
the means in the end user devices (3a-3d) is designed to produce and/or interpret control signals exchanged between said end user devices over one of the established channels to provide basic and/or supplementary telephony services.

11. The system according to claim 8, wherein
the means in the end user devices (3a-3d) is designed to process and/or interpret voice signals exchanged between said end user devices over one of the established channels to effect voice telephony between said end user devices (3a-3d).

12. The system according to claim 8, further comprising
a telephony server (2) for providing desired central functions, in particular user and access control information, said telephony server being designed to communicate essentially directly and independently with each of the end user devices (3a-3d).

13. The system according to any of claims 8 to 12, wherein
the end user device (3a-3d) is a multi-purpose workstation or personal computer.

## Patentansprüche

1. Ein Verfahren zur Bereitstellung und/oder Steuerung einer Telefonverbindung zwischen mindestens zwei Benutzern, die durch ein Netzwerk (1, 4-6) miteinander verbunden sind, wobei das Verfahren folgende Schritte umfasst:
Aufbau eines ersten Übertragungskanals (12) zwischen den Benutzern zur Übertragung erster Signale,
Aufbau eines zweiten Übertragungskanals (13) zwischen den Benutzern zur Übertragung zweiter Signale,
wobei der erste und der zweite Übertragungskanal (12, 13) voneinander unabhängig sind,
wobei jeder Übertragungskanal im wesentlichen direkt zwischen den Endgeräten (3a - 3d), die jeweils direkt einem der Benutzer zugeordnet sind, hergestellt wird,
und das erste und zweite Signal von oder in den Endgeräten (3a - 3d) generiert wird.

2. Das Verfahren nach Anspruch 1, wobei
die zwischen den Endgeräten (3a - 3d) ausgetauschten ersten Signale Steuersignale und die zweiten Signale Sprachsignale, und vorzugsweise codierte Sprachsignale, sind.

3. Das Verfahren nach Anspruch 2, wobei
die zwischen den Endgeräten (3a - 3d) ausgetauschten Steuersignale Signale beinhalten, die elementare Telefondienste und/oder zusätzliche Telefondienste bewirken und/oder bereitstellen.

4. Das Verfahren nach Anspruch 3, wobei
die zwischen den Endgeräten (3a - 3d) ausgetauschten Steuersignale, die von oder in diesen Geräten generiert werden, gewünschte Kanalaufbau- und Steuerfunktionen direkt von den Endgeräten bereitstellen.

5. Das Verfahren nach Anspruch 1 bis 4, wobei
zusätzlich zu den Kommunikationssignalen eine Sprachübertragungsfunktion einschließlich Verschlüsselung/Entschlüsselung in den Endgeräten (3a - 3d) implementiert ist.

6. Das Verfahren nach Anspruch 1, wobei
jeder der Kanäle (12, 13), die die Endgeräte (3c, 3d) der Benutzer, die miteinander kommunizieren oder kommunizieren wollen, verbinden, transparent und unabhängig ist.

7. Das Verfahren nach Anspruch 1, wobei
ein Übertragungskanal (12), vorzugsweise der erste, während einer Telefonsitzung permanent aufrecht erhalten wird, während der andere, vorzugsweise der zweite, Übertragungskanal (13) so ausgelegt ist, dass ein intermittierender Betrieb möglich ist.

8. Ein verteiltes System zur Bereitstellung und/oder Steuerung einer Telefonverbindung zwischen mindestens zwei Endgeräten (3a - 3d) über ein dezentrales Netz (1), wobei
mindestens eines der Endgeräte (3a - 3d) Mittel zum Aufbau eines ersten Übertragungskanals (12) im wesentlichen direkt zwischen den Endgeräten (3a - 3d) umfasst, um erste Signale zu übertragen, und
mindestens eines der Endgeräte (3a - 3d) Mittel zum Aufbau eines unabhängigen zweiten Übertragungskanals (13) im wesentlichen direkt zwischen den Endgeräten (3a - 3d) umfasst, um zweite Signale zu übertragen.

9. Das System nach Anspruch 8, wobei
das Mittel in den Endgeräten (3a - 3d) so ausgelegt ist, dass ein intermittierender Betrieb eines der Kanäle möglich ist, während der andere Kanal permanent aufrecht erhalten wird.

10. Das System nach Anspruch 8, wobei
das Mittel in den Endgeräten (3a - 3d) so ausgelegt ist, dass es Steuersignale, die über einen der aufgebauten Kanäle zwischen den Endgeräten ausgetauscht werden, erzeugt und/oder interpretiert, um elementare und/oder zusätzliche Telefondienste bereitzustellen.

11. Das System nach Anspruch 8, wobei
das Mittel in den Endgeräten (3a - 3d) so ausgelegt ist, dass es Sprachsignale, die über einen der aufgebauten Kanäle zwischen den Endgeräten ausgetauscht werden, erzeugt und/oder interpretiert, um eine Sprachtelefonie zwischen den Endgeräten (3a - 3d) zu bewirken.

12. Das System nach Anspruch 8, das außerdem einen Telefonserver (2) für gewünschte zentrale Funktionen, und speziell Benutzer- und Zugangsdaten, umfasst, wobei der Telefonserver so ausgelegt ist, dass er im wesentlichen direkt und unabhängig mit jedem der Endgeräte (3a - 3d) kommuniziert.

13. Das System Nach Anspruch 8 bis 12, wobei
das Endgerät (3a - 3d) eine Mehrzweckdatenstation oder ein PC ist.

## Revendications

1. Procédé destiné à fournir et/ou à commander une connexion téléphonique entre au moins deux utilisateurs connectés à un réseau (1, 4 à 6), ledit procédé comprenant les étapes consistant à :
- établir un premier canal de communication (12) entre lesdits utilisateurs pour émettre des premiers signaux,
- établir un deuxième canal de communication (13) entre lesdits utilisateurs pour émettre des deuxièmes signaux,
- lesdits premier et deuxième canaux de communication (12, 13) étant indépendants les uns des autres,
- chaque dit canal de communication étant essentiellement établi directement entre les dispositifs utilisateur final (3a à 3d) dont chacun est directement associé à l'un desdits utilisateurs, et
lesdits premier et deuxième signaux étant chacun générés par ou au sein desdits dispositifs utilisateur final (3a à 3d).

2. Procédé selon la revendication 1, dans lequel
les premiers signaux échangés entre les dispositifs utilisateur final (3a à 3d) sont des signaux de commande et les deuxième signaux sont des signaux de parole, de préférence des signaux de parole codés.

3. Procédé selon la revendication 2, dans lequel
les signaux de commande échangés entre les dispositifs utilisateur final (3a à 3d) comprennent des signaux résultants et/ou assurant des services téléphoniques de base et/ou des services téléphoniques supplémentaires.

4. Procédé selon l'une quelconque des revendications précédentes, dans lequel
les signaux de commande échangés entre les dispositifs utilisateur final (3a à 3d) générés par ou à l'intérieur desdits dispositifs assurent les canaux d'établissement désirés et les fonctions de commande directement à partir desdits dispositifs utilisateur final.

5. Procédé selon l'une quelconque des revendications précédentes, dans lequel
en plus des signaux de communication, une fonction de transmission de voix, comprenant le codage/décodage, est mise en oeuvre dans les dispositifs utilisateur final (3a à 3d).

6. Procédé selon la revendication 1, dans lequel
chacun des canaux (12, 13) reliant les dispositifs utilisateur final (3c à 3d) des utilisateurs communiquant ou souhaitant communiquer est transparent et indépendant.

7. Procédé selon la revendication 1, dans lequel
un canal, de préférence le premier canal de communication (12), est maintenu en permanence par le biais d'une session téléphonique, alors que l'autre canal, de préférence le deuxième canal de communication (13), est conçu pour fonctionner en opération intermittente.

8. Système réparti destiné à procurer et/ou à commander une connexion téléphonique entre au moins deux dispositifs utilisateur final (3a à 3d) sur un réseau décentralisé (1), dans lequel
- au moins un desdits dispositifs utilisateur final (3a à 3d) comprend un moyen destiné à établir un premier canal de communication (12) directement et essentiellement entre lesdits dispositifs utilisateur final (3a à 3d) pour émettre les premiers signaux, et
- au moins un desdits dispositifs utilisateur final (3a à 3d) comprend un moyen destiné à établir un deuxième canal de communication (12) indépendant directement et essentiellement entre lesdits dispositifs utilisateur final (3a à 3d) pour émettre les deuxièmes signaux.

9. Procédé selon la revendication 8, dans lequel
le moyen dans les dispositifs utilisateur final (3a à 3d) est conçu pour exécuter une opération intermittente de l'un des canaux, tandis que l'autre canal est maintenu en permanence.

10. Système selon la revendication 8, dans lequel
le moyen dans les dispositifs utilisateur final (3a à 3d) est conçu pour produire et/ou interpréter des signaux de commande échangés entre lesdits dispositifs utilisateur final sur l'un des canaux établis pour assurer des service téléphoniques de base et/ou supplémentaires.

11. Système selon la revendication 8, dans lequel
le moyen dans les dispositifs utilisateur final (3a à 3d) est désigné pour traiter et/ou interpréter des signaux de parole échangés entre lesdits dispositifs utilisateur final sur l'un des canaux établis pour réaliser de la téléphonie vocale entre lesdits dispositifs utilisateur final (3a à 3d).

12. Système selon la revendication 8, comprenant de plus
un serveur téléphonique (2) pour assurer les fonctions désirées, en particulier les informations utilisateurs et les informations de commande d'accès, ledit serveur téléphonique étant conçu pour communiquer essentiellement, directement et indépendamment avec chacun des dispositifs utilisateur final (3a à 3d).

13. Système selon l'une quelconque des revendications 8 à 12, dans lequel
le dispositif utilisateur final (3a à 3d) est une station de travail ou un ordinateur personnel à usage multiples.
